# EUROPEAN PATENT APPLICATION

(11) **EP 4 667 355 A1**
(43) Date of publication of application: **24.12.2025**
(21) Application number: 24774975.7
(22) Date of filing: 21.03.2024
(51) Int. Cl.: B64C 25/24, H02P 25/032

(54) **LANDING GEAR FOR AIRCRAFT**

(30) Priority: 22.03.2023 JP 2023045336
(71) Applicant: Sumitomo Precision Products Co., Ltd., Amagasaki-shi, Hyogo 660-0891 (JP)
(72) Inventor: TADA, Kazunari, Amagasaki-shi, Hyogo 660-0891 (JP); HASEGAWA, Kazuomi, Amagasaki-shi, Hyogo 660-0891 (JP)
(74) Representative: BRP Renaud & Partner mbB Rechtsanwälte Patentanwälte Steuerberater
(86) International application number: PCT/JP2024/011117
(87) International publication number: WO 2024/195841

(57) **Abstract**

A landing gear (1) for an aircraft includes: a landing gear structure (2) attached to an airframe (10); a linear motor (3) that is interposed between the airframe and the landing gear structure and configured to extend and retract along an axis X to store the landing gear structure in the airframe and to deploy the landing gear structure from the airframe; and a controller (4) configured to control the linear motor such that the landing gear structure switches between a landing position and a retracted position.

## Description

### TECHNICAL FIELD

The technique disclosed herein relates to a landing gear for an aircraft.

### BACKGROUND ART

Patent Document 1 describes a landing gear for an aircraft. This conventional landing gear includes a landing gear structure and a hydraulic cylinder. The landing gear structure swings between a retracted position in which the landing gear structure is stored in a landing gear bay of the airframe and a landing position in which the landing gear structure is deployed from the landing gear bay. The piston rod of the hydraulic cylinder is connected to the landing gear structure, and the landing gear structure switches between the retracted position and the landing position as the piston rod advances and retracts.

### CITATION LIST

### PATENT DOCUMENT

Patent Document 1: Japanese Patent No. 4240514

### SUMMARY OF THE INVENTION

### TECHNICAL PROBLEM

The hydraulic cylinder of the conventional landing gear mentioned above receives operation oil from a centralized hydraulic source in a hydraulic system of the aircraft. The flow rate of the operation oil supplied to raise and lower the landing gear structure is significantly higher than the flow rate supplied to a hydraulic control system such as a flight control system. The hydraulic cylinder of the landing gear imposes a significant burden on the hydraulic system of the aircraft in terms of weight, capacity, and/or energy consumption.

Therefore, studies have been conducted to replace the hydraulic cylinder of the landing gear with an electric actuator. For example, use of a rotary electric motor and a gear mechanism that converts the rotary motion of the electric motor into linear motion has been studied to raise and lower the landing gear structure.

However, an electric actuator combining a rotary electric motor and a gear mechanism may cause a failure such as burnout of the electric motor due to, for example, jamming of the gear mechanism or an overload caused by such a malfunction. To ensure that the landing gear structure takes the landing position even if a failure occurs, the landing gear requires safety measures using separate components, such as a clutch that disconnects the landing gear structure from the electric actuator. This leads to a complicated structure of the landing gear, resulting in increased weight and reduced reliability. Since such technical issues have not been solved, a landing gear using an electric actuator has not yet been put into practical use.

The technique disclosed herein relates to the electrification of a landing gear of an aircraft.

### SOLUTION TO THE PROBLEMS

The technique disclosed herein relates to a landing gear for an aircraft. The landing gear for an aircraft includes:
a landing gear structure attached to an airframe;
a linear motor that is interposed between the airframe and the landing gear structure and that extends and retracts along an axis to store the landing gear structure in the airframe and to deploy the landing gear structure from the airframe; and
a controller that controls the linear motor such that the landing gear structure switches between a landing position and a retracted position.

The landing gear includes the linear motor. The linear motor is a linear-motion actuator that extends and retracts along the axis. The landing gear structure switches between the landing position and the retracted position by extension and retraction of the linear motor. The landing gear structure in the landing position is deployed from the airframe. The landing gear structure in the retracted position is stored in the airframe.

The linear motor can replace a hydraulic cylinder that extends and retracts. It is not necessary to provide a conversion mechanism for converting the direction of movement, such as a gear mechanism, between the linear motor and the landing gear structure. Therefore, failures in the conversion mechanism, such as jamming of a gear mechanism, do not occur. Further, a failure such as burnout of the electric motor does not occur.

The landing gear including the linear motor eliminates the need for a safety measure using a separate component (such as a clutch), which is necessary in a conventional landing gear including an electric actuator. The structure of the landing gear including the linear motor is not complicated and is highly reliable. In addition, since the hydraulic cylinder is eliminated from the landing gear, the landing gear including the linear motor is advantageous for weight reduction.

The linear motor may be connected to the landing gear structure such that the landing gear structure takes the landing position by its own weight when the controller stops supplying power to the linear motor.

The linear motor can extend and retract freely while the power supply from the controller is stopped. As described above, since no gear mechanism is interposed between the linear motor and the landing gear structure, the linear motor and the landing gear structure are connected so that the linear motor extends and retracts by the weight of the landing gear structure. When the controller stops supplying power to the linear motor, the landing gear structure moves into the landing position due to its own weight. The landing gear can ensure safety with a simple structure in the event of a failure.

The landing gear may further include an up-lock mechanism that engages with the landing gear structure stored in the airframe and holds the landing gear structure in the retracted position. While the up-lock mechanism locks the landing gear structure, the landing gear structure is held in the retracted position even when the power supply to the linear motor is stopped. This reduces the energy consumption of the landing gear.

The landing gear of the aircraft may further include a sensor that outputs a measurement signal related to the position of the landing gear structure to the controller, and
based on the measurement signal from the sensor, the controller may decelerate the linear motor when the landing gear structure switching from the landing position to the retracted position reaches a first predetermined position that is a position before the landing gear structure reaches the retracted position, and decelerate the linear motor when the landing gear structure switching from the retracted position to the landing position reaches a second predetermined position that is a position before the landing gear structure reaches the landing position.

In the landing gear of the aircraft, it is necessary to mitigate impacts that occur when the landing gear structure reaches the retracted position and when the landing gear structure reaches the landing position. In a conventional landing gear including a hydraulic cylinder, a snubbing mechanism that reduces the moving speed of the piston immediately before the landing gear structure reaches the retracted position and immediately before the landing gear structure reaches the landing position is provided in the hydraulic cylinder. The snubbing mechanism has, for example, a throttle flow path that limits the flow rate of the operation oil in the hydraulic cylinder. Such a snubbing mechanism complicates the structure of the hydraulic cylinder and may cause a problem such as clogging of the throttle flow path.

In contrast, in the landing gear including the linear motor, the controller can change the extension and retraction speed of the linear motor by adjusting the power supply to the linear motor. The landing gear can achieve the snubbing function even with a simple structure.

Specifically, the sensor outputs a measurement signal related to the position of the landing gear structure to the controller. Since the position of the landing gear structure and the stroke amount of the linear motor correspond to each other, the sensor may measure the stroke amount of the linear motor and output a measurement signal thereof. The sensor may also measure the position of the landing gear structure itself, which changes between the retracted position and the landing position, and output the measurement signal.

The controller can determine, based on the measurement signal from the sensor, that the landing gear structure switching from the landing position to the retracted position has reached the first predetermined position which is a position before the landing gear structure reaches the retracted position. The controller decelerates the linear motor when the landing gear structure reaches the first predetermined position. This mitigates the impact when the landing gear structure reaches the retracted position. The controller can determine, based on the measurement signal from the sensor, that the landing gear structure switching from the retracted position to the landing position has reached the second predetermined position which is a position before the landing gear structure reaches the landing position. The controller decelerates the linear motor when the landing gear structure reaches the second predetermined position. This mitigates the impact when the landing gear structure reaches the landing position.

### ADVANTAGES OF THE INVENTION

The landing gear for the aircraft achieves the electrification with a simple structure.

### BRIEF DESCRIPTION OF THE DRAWINGS

[FIG. 1] FIG. 1 is a diagram illustrating a landing gear for an aircraft.
[FIG. 2] FIG. 2 is a cross-sectional view of a linear motor.
[FIG. 3] FIG. 3 is a block diagram relating to control of the landing gear.
[FIG. 4] FIG. 4 is a control procedure for the landing gear.

### DESCRIPTION OF EMBODIMENT

Hereinafter, an embodiment of a landing gear for an aircraft will be described with reference to the drawings. The landing gear described herein is an example.

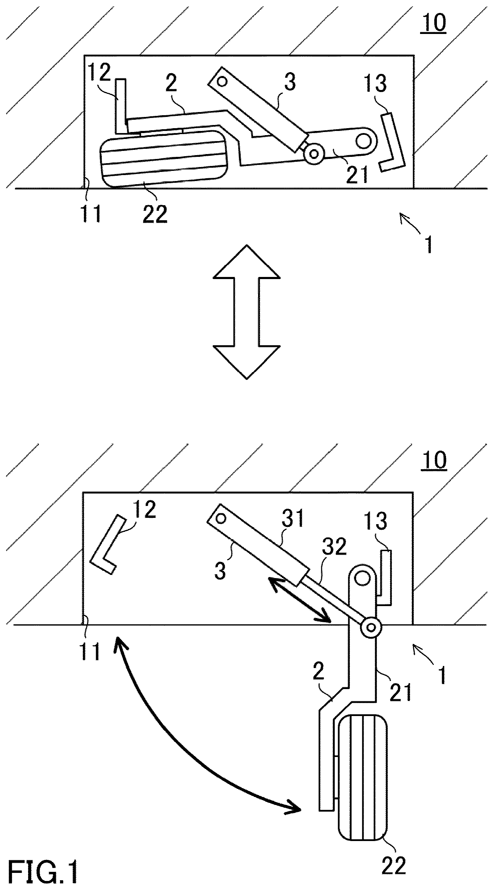

FIG. 1 is a diagram illustrating a landing gear 1 for an aircraft. The landing gear 1 constitutes a main gear or a nose gear of the aircraft. As described later, the landing gear 1 is electrified by including a linear motor 3. For example, if the steering mechanism of the nose gear is electrified, the electrified landing gear 1 is suitable for use as the nose gear of the aircraft. This is because, if both the steering mechanism and the landing gear of the nose gear are electrified, it is not necessary to arrange hydraulic piping up to the front of the aircraft for the nose gear.

A landing gear bay 11 is formed in an airframe 10 of the aircraft. A lower portion of the landing gear bay 11 is open downward. A door is attached to the opening of the landing gear bay 11. The landing gear 1 is stored in the landing gear bay 11 during flight of the aircraft as illustrated in the upper diagram of FIG. 1. The landing gear 1 is deployed from the landing gear bay 11 as illustrated in the lower diagram of FIG. 1 when the aircraft lands or takes off.

The landing gear 1 has a landing gear structure 2. The landing gear structure 2 includes a strut 21 and a wheel 22. The wheel 22 is supported at a distal end of the strut 21. The proximal end of the strut 21 is supported rotatably with respect to the airframe 10. The landing gear structure 2 swings between a landing position and a retracted position as indicated by the arrow mark in the lower diagram of FIG. 1. The steering mechanism of the wheel 22 described above may be attached to the landing gear structure 2.

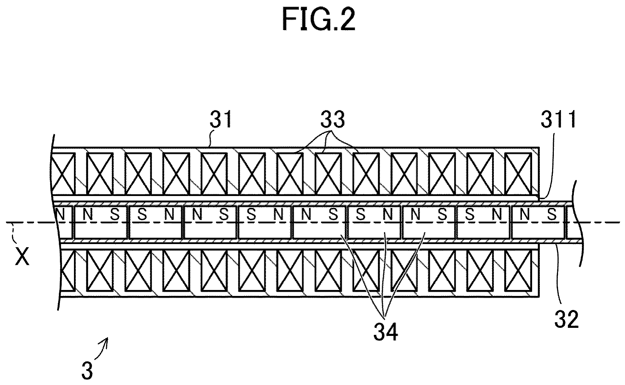

The landing gear 1 includes a linear motor 3. The linear motor 3 is a linear-motion actuator that extends and retracts in the direction indicated by the arrow mark in the lower diagram of FIG. 1. FIG. 2 schematically illustrates the structure of the linear motor 3. The linear motor 3 has a stator 31 and a mover 32. The stator 31 is a cylinder extending along the axis X. The stator 31 has a plurality of coils 33 arranged along the axis X. The center hole 311 of the stator 31 is closed at a first end and open at a second end. As described later, the first end refers to an end at which the stator 31 is fixed to the airframe 10, and the second end refers to an end opposite to the first end in the direction along the axis X.

The mover 32 is a rod extending along the axis X. The mover 32 is inserted into the center hole 311 of the stator 31 and protrudes from the second end of the stator 31. The mover 32 is capable of moving relative to the stator 31 in the direction along the axis X. The linear motor 3 extends and retracts in the direction along the axis X by the relative movement of the mover 32.

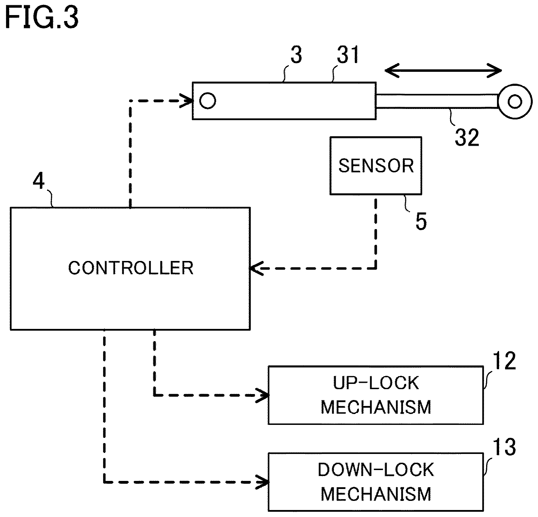

The mover 32 has a plurality of permanent magnets 34 arranged along the axis X. The plurality of permanent magnets 34 are arranged such that the directions of the magnetic poles alternate. When a controller 4 illustrated in FIG. 3 applies an alternating current to the coils 33 of the stator 31, a moving magnetic field is generated around the coils 33. The moving magnetic field attracts the permanent magnets 34 of the mover 32, thereby generating a thrust that causes the mover 32 to move relative to the stator 31 in the direction along the axis X. This causes extension and retraction of the linear motor 3.

The cross-sectional shape of the mover 32 of the linear motor 3 is not limited to a circular shape. The mover 32 with a rectangular cross-sectional shape, for example, improves space efficiency compared to a mover with a circular cross section while ensuring the same strength. The linear motor 3 improves the layout flexibility of the landing gear 1 compared to a hydraulic cylinder.

As shown in FIG. 1, the first end of the stator 31 is attached to the airframe 10. The distal end of the mover 32 is attached to the strut 21. When the linear motor 3 is retracted, the landing gear structure 2 takes the retracted position (see the upper diagram of FIG. 1), and when the linear motor 3 is extended, the landing gear structure 2 takes the landing position (see the lower diagram of FIG. 1).

While no current is supplied to the linear motor 3, no magnetic field is generated. Therefore, the mover 32 of the linear motor 3 can move freely relative to the stator 31. When no current is supplied to the linear motor 3 and the weight of the landing gear structure 2 acts on the linear motor 3, the linear motor 3 extends. In other words, the linear motor 3 and the landing gear structure 2 are connected to each other so that the linear motor 3 extends and retracts by the weight of the landing gear structure 2.

Both the first end and the second end of the stator 31 of the linear motor 3 may be open. In this case, the first end of the stator 31 is not necessarily attached to the airframe 10. Further, in a case where both the first end and the second end of the stator 31 are open, the mover 32 may protrude from both the first end and the second end of the stator 31 depending on its position relative to the stator 31.

The landing gear 1 also includes an up-lock mechanism 12 and a down-lock mechanism 13. As shown in the upper diagram of FIG. 1, the up-lock mechanism 12 engages with the landing gear structure 2 stored in the landing gear bay 11 and holds the landing gear structure 2 in the retracted position. While the up-lock mechanism 12 is locked, the landing gear structure 2 is held in the retracted position even when the power supply to the linear motor 3 is stopped. The up-lock mechanism 12 promotes energy saving in the landing gear 1.

As shown in the lower diagram of FIG. 1, the down-lock mechanism 13 engages with the landing gear structure 2 deployed from the landing gear bay 11 and holds the landing gear structure 2 in the landing position. While the down-lock mechanism 13 is locked, the landing gear structure 2 is held in the landing position even if the power supply to the linear motor 3 is stopped. The down-lock mechanism 13 promotes energy saving in the landing gear 1.

Both the up-lock mechanism 12 and the down-lock mechanism 13 are electrically driven. As shown in FIG. 3, the up-lock mechanism 12 releases the lock in response to a control signal from the controller 4. Similarly, the down-lock mechanism 13 releases the lock in response to a control signal from the controller 4. The up-lock mechanism 12 may have a mechanism for manually releasing the lock in an emergency.

FIG. 3 illustrates a configuration related to control of the landing gear 1. The landing gear 1 includes a controller 4. The controller 4 outputs a control signal (that is, an AC current signal) to the linear motor 3. The linear motor 3 extends and retracts according to a control signal from the controller 4, and switches the landing gear structure 2 between the retracted position and the landing position. The landing gear 1 includes a sensor 5. The sensor 5 outputs a measurement signal related to the position of the landing gear structure 2 to the controller 4. The position of the landing gear structure 2 corresponds to the stroke amount of the linear motor 3. The sensor 5 may measure the stroke amount of the linear motor 3 and output the measurement signal to the controller 4. The sensor 5 may also measure the position of the landing gear structure itself, which changes between the retracted position and the landing position, and output the measurement signal to the controller 4.

Although details will be described later, the controller 4 receives a measurement signal from the sensor 5 and adjusts the extension and retraction speed of the linear motor 3. That is, the controller 4 decelerates the linear motor 3 immediately before the landing gear structure 2 switching from the landing position to the retracted position reaches the retracted position. This mitigates the impact when the landing gear structure 2 reaches the retracted position. Further, the controller 4 decelerates the linear motor 3 immediately before the landing gear structure 2 switching from the retracted position to the landing position reaches the landing position. This mitigates the impact when the landing gear structure 2 reaches the landing position.

The controller 4 also outputs control signals to the up-lock mechanism 12 and the down-lock mechanism 13 as described above.

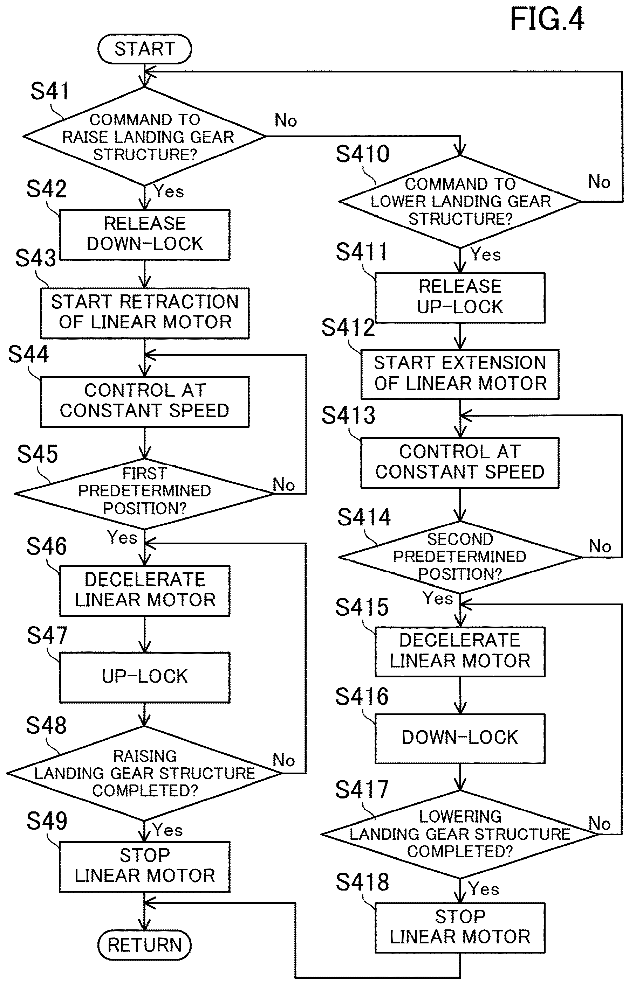

FIG. 4 illustrates a procedure of raising and lowering control of the landing gear structure 2 executed by the controller 4. In step S41 after the start, the controller 4 determines whether a command to raise the landing gear structure 2, that is, a command to switch the landing gear structure 2 from the landing position to the retracted position, has been received. When the determination at step S41 is No, the controller 4 determines at step S410 whether a command to lower the landing gear structure 2, that is, a command to switch the landing gear structure 2 from the retracted position to the landing position, has been received. If the determination at step S410 is No, the control process returns to step S41. The controller 4 waits for a command to raise the landing gear structure 2 or a command to lower the landing gear structure 2.

When the determination in step S41 is Yes, the controller 4 outputs a control signal to the down-lock mechanism 13 in step S42 to release the lock. The down-lock mechanism 13 that has received the control signal releases the lock.

In the subsequent step S43, the controller 4 outputs a control signal to the linear motor 3 to start retraction of the linear motor 3. The controller 4 retracts the linear motor 3 at a constant speed in step S44, and in step S45, the controller 4 determines, based on the measurement signal from the sensor 5, whether the landing gear structure 2 has reached a first predetermined position that is a position immediately before it reaches the retracted position. When the landing gear structure 2 has not reached the first predetermined position, the controller 4 continues the retraction of the linear motor 3 at the constant speed in step S44.

When the landing gear structure 2 reached the first predetermined position, the controller 4 reduces the retraction speed of the linear motor 3 in step S46. In the subsequent step S47, the up-lock mechanism 12 locks the landing gear structure 2. In step S48, the controller 4 determines whether the raising of the landing gear structure has been completed, in other words, whether the landing gear structure 2 has reached the retracted position, based on the measurement signal from the sensor 5. When the determination in step S48 is No, the controller 4 continues the retraction of the linear motor 3 at a low speed in step S46.

When the determination in step S48 is Yes, the controller 4 stops the power supply to the linear motor 3 in step S49, thereby stopping the linear motor 3. Since the linear motor 3 is retracted at a low speed from a moment shortly before the landing gear structure 2 reaches the retracted position, the impact that occurs when the landing gear structure 2 reaches the retracted position is mitigated. Even when the power supply to the linear motor 3 is stopped, the landing gear structure 2 is held in the retracted position because the up-lock mechanism 12 locks the landing gear structure 2.

Returning to step S410, when the determination in step S410 is Yes, the controller 4 outputs a control signal to the up-lock mechanism 12 in step S411 to release the lock. The up-lock mechanism 12 that has received the control signal releases the lock.

In the subsequent step S412, the controller 4 outputs a control signal to the linear motor 3 to start extension of the linear motor 3. The controller 4 extends the linear motor 3 at a constant speed in step S413, and in step S414, the controller 4 determines, based on the measurement signal from the sensor 5, whether the landing gear structure 2 has reached a second predetermined position that is a position immediately before it reaches the landing position. When the landing gear structure 2 has not reached the second predetermined position, the controller 4 continues the extension of the linear motor 3 at the constant speed in step S413.

When the landing gear structure 2 reaches the second predetermined position, the controller 4 reduces the extension speed of the linear motor 3 in step S415. In the subsequent step S416, the down-lock mechanism 13 locks the landing gear structure 2. In step S417, the controller 4 determines whether the lowering of the landing gear structure has been completed, in other words, whether the landing gear structure 2 has reached the landing position, based on the measurement signal from the sensor 5. When the determination in step S417 is No, the controller 4 continues the extension of the linear motor 3 at a low speed in step S415.

When the determination in step S417 is Yes, the controller 4 stops the power supply to the linear motor 3 in step S418, thereby stopping the linear motor 3. Since the linear motor 3 is extended at a low speed from a moment shortly before the landing gear structure 2 reaches the landing position, the impact that occurs when the landing gear structure 2 reaches the landing position is mitigated. Since the down-lock mechanism 13 locks the landing gear structure 2, the landing gear structure 2 is held in the landing position even when the power supply to the linear motor 3 is stopped.

The landing gear 1 includes the linear motor 3 as a drive source for raising and lowering the landing gear structure 2. Since the linear motor 3 is a linear-motion actuator that extends and retracts along the axis, the linear motor 3 can replace a hydraulic cylinder that extends and retracts and has been used in conventional landing gear.

Since the linear motor 3 is a linear-motion actuator, a conversion mechanism that converts the direction of movement, for example, a gear mechanism is not required between the linear motor 3 and the landing gear structure 2. Therefore, the landing gear 1 does not experience failures in the conversion mechanism, such as jamming in a gear mechanism. Further, a failure such as burnout of the electric motor caused by a malfunction of the gear mechanism does not occur.

The landing gear 1 eliminates the need for a safety measure such as a clutch, which is necessary in landing gear including an electric actuator that is a combination of a rotary electric motor and a gear mechanism. The landing gear 1 has a simple structure and can ensure high reliability. In addition, since the hydraulic cylinder is excluded from the landing gear, the landing gear 1 is advantageous for weight reduction.

Further, the linear motor 3 freely extends and retracts while the power supply from the controller 4 is stopped. As described above, since no gear mechanism is interposed between the linear motor 3 and the landing gear structure 2, if the controller 4 stops supplying power to the linear motor 3 while the up-lock mechanism 12 is released, the linear motor 3 extends due to the weight of the landing gear structure 2, and the landing gear structure 2 reaches the landing position. The landing gear 1 can ensure safety with a simple structure in the event of a failure.

Further, the linear motor 3 can achieve a larger stroke amount more easily than a hydraulic cylinder having the same overall length. The linear motor 3, which is a linear-motion actuator with a large stroke amount, allows a higher degree of freedom in designing the landing gear 1.

Further, the landing gear 1 including the linear motor 3 can change the extension and retraction speed of the linear motor 3 through adjustment of the power supply to the linear motor 3 by the controller 4, as described above. The landing gear 1 can achieve the snubbing function with a simple structure.

In the landing gear 1, the control on adjustment of the extension and retraction speed of the linear motor 3 may be omitted. In this case, the landing gear 1 may omit the sensor 5, that is, the sensor that outputs a measurement signal related to the position of the landing gear structure 2 to the controller 4. The landing gear 1 may use sensors attached to the up-lock mechanism 12 and the down-lock mechanism 13 instead of the sensor 5, and the controller 4 may stop the linear motor 3 when those sensors detect the up-lock and the down-lock states.

The structure of the landing gear 1 shown in FIG. 1 is an example. A link mechanism may be interposed between the linear motor 3 and the landing gear structure 2. For example, a link mechanism may be provided such that the landing gear structure 2 is switched from the landing position to the retracted position by the extension of the linear motor 3, and that the landing gear structure 2 is switched from the retracted position to the landing position by the retraction of the linear motor 3, contrary to the structure of FIG. 1.

### DESCRIPTION OF REFERENCE CHARACTERS

- 1: Landing Gear
- 10: Airframe
- 2: Landing Gear Structure
- 3: Linear Motor
- 4: Controller
- 5: Sensor
- X: Axis

## Claims

1. A landing gear for an aircraft, comprising:
a landing gear structure attached to an airframe;
a linear motor that is interposed between the airframe and the landing gear structure and that extends and retracts along an axis to store the landing gear structure in the airframe and to deploy the landing gear structure from the airframe; and
a controller that controls the linear motor such that the landing gear structure switches between a landing position and a retracted position.

2. The landing gear for an aircraft of claim 1, wherein
the linear motor is connected to the landing gear structure such that the landing gear structure takes the landing position by its own weight when the controller stops supplying power to the linear motor.

3. The landing gear for an aircraft of claim 1 or 2, further comprising:
a sensor that outputs a measurement signal related to the position of the landing gear structure to the controller, wherein
based on the measurement signal from the sensor, the controller decelerates the linear motor when the landing gear structure switching from the landing position to the retracted position reaches a first predetermined position that is a position before the landing gear structure reaches the retracted position, and decelerates the linear motor when the landing gear structure switching from the retracted position to the landing position reaches a second predetermined position that is a position before the landing gear structure reaches the landing position.
